# EUROPÄISCHE PATENTSCHRIFT

(11) **EP 1 474 268 B1**
(45) Veröffentlichungstag und Bekanntmachung des Hinweises auf die Patenterteilung: **27.07.2005**
(21) Anmeldenummer: 03732414.2
(22) Anmeldetag: 19.05.2003
(51) Int. Cl.: B23Q 11/00, B23Q 11/10, B01D 33/06

(54) **VORRICHTUNG ZUR AUFNAHME UND TRENNUNG VON AN WERKZEUGMASCHINEN ANFALLENDEN SPÄNEN UND KÜHLFLÜSSIGKEIT (DICHTUNG)**
DEVICE FOR RECEIVING AND SEPARATING CHIPS CREATED BY MACHINE-TOOLS AND COOLANT (SEALANT)
DISPOSITIF DE RECUEIL ET DE SEPARATION DE COPEAUX ET LIQUIDE DE REFROIDISSEMENT TOMBANT SUR DES MACHINES-OUTILS (ETANCHEITE)

(30) Priorität: 24.05.2002 DE 10223294
(43) Veröffentlichungstag der Anmeldung: 10.11.2004
(73) Patentinhaber: Mayfran International B.V., 6370 AA Landgraaf (NL)
(72) Erfinder: ACKERMANNS, Leo, J., P., NL-6305 AJ Schin op Geul (NL); SOUREN, Rimmond, H., B., NL-6231 JR Meersen (NL)
(74) Vertreter: König, Werner, Dipl.-Ing.
(86) Internationale Anmeldenummer: PCT/EP2003/005244
(87) Internationale Veröffentlichungsnummer: WO 2003/099512

(56) Entgegenhaltungen:
- US-A- 5 871 643
- US-B1- 6 332 983
- PATENT ABSTRACTS OF JAPAN vol. 2000, no. 10, 17. November 2000 (2000-11-17) -& JP 2000 202215 A (SHISUTO:KK), 25. Juli 2000 (2000-07-25)
- PATENT ABSTRACTS OF JAPAN vol. 2000, no. 13, 5. Februar 2001 (2001-02-05) -& JP 2000 300914 A (SHISUTO:KK), 31. Oktober 2000 (2000-10-31)
- PATENT ABSTRACTS OF JAPAN vol. 2002, no. 08, 5. August 2002 (2002-08-05) -& JP 2002 102608 A (ENSHU LTD), 9. April 2002 (2002-04-09)

## Beschreibung

Die Erfindung betrifft eine Vorrichtung zur Aufnahme und Trennung von an Werkzeugmaschinen anfallenden Spänen und Kühlflüssigkeit, wobei die Kühlflüssigkeit zum Wiedereinsatz zurückgeführt und die Späne abgeführt werden, mit einem Aufnahmetank zur Aufnahme der Späne und der Kühlflüssigkeit, einem sich an den Aufnahmetank anschließenden ansteigenden Führungsabschnitt, einem sich an den Führungsabschnitt anschließenden erhöhten Abgabeabschnitt, einem kettenartigen geschlossenen Transportelement, welches zumindest in dem die Späne und die Kühlflüssigkeit aufnehmenden Bereich sowie in dem Abgabeabschnitt über Umlenkelemente geführt ist, von denen mindestens eines mit einem Drehantrieb gekoppelt ist und einer drehbar gelagerten Filtertrommel, welche mit dem Transportelement in Antriebsverbindung steht (siehe Z.B. US-A-6 332 983).

Die Lager einer solchen Filtertrommel unterliegen zwangsläufig auch einer axialen Belastung und sind demzufolge immer auch verschleißbehaftet.

Die Aufgabe der vorliegenden Erfindung besteht nun vor allem darin, bei einer Vorrichtung der eingangs erwähnten Art den durch axiale Lagerbelastung auftretenden Verschleiß zu reduzieren und die Anforderungen an die in axialer Richtung kooperierenden Elemente herabzusetzen.

Diese Aufgabe wird erfindungsgemäß dadurch gelöst, dass die Filtertrommel an ihren beiden Enden je einen inneren Lagerring aufweist, der jeweils drehfest in einen äußeren Lagerring eingreift, dass parallel zur Achse der Filtertrommel verlaufende Federelemente vorgesehen sind, die sich einerseits an dem inneren Lagerring und andererseits an dem äußeren Lagerring abstützen, dass der äußere Lagerring jeweils in einer gehäusefesten Lagerschale sitzt und sich an dieser in axialer Richtung abstützt und dass Dichtelemente jeweils zwischen dem inneren Lagerring und äußeren Lagerring vorgesehen sind.

Durch die Anordnung von Federelementen zwischen innerem und äußerem Lagerring können geringe Toleranzabweichungen hier ohne weiteres ausgeglichen werden.

Vorzugsweise sitzen dabei die Federelemente in einer Bohrung des inneren Lagerrings und wirken auf eine Stimfläche des jeweils äußeren Lagerrings. Dichtelemente zwischen diesen beiden Lagerringen verhindern, dass ungefilterte Kühlflüssigkeit unter Umgehung des Filters in den sauberen Bereich übertreten können. Der Federdruck auf den äußeren Lagerring wird in axialer Richtung auf die gehäusefeste Lagerschale übertragen, also in eine Zone, in der radiale Flächen aufeinander gleiten und Verschleiß vorkommt. Der auf den äußeren Lagerring einwirkende Federdruck bewirkt einen Ausgleich bei derartigem Verschleiß.

Die erfindungsgemäße Vorrichtung kann so ausgebildet sein, dass jeweils der äußere Lagerring mit der gehäusefesten Lagerschale eine Labyrinthdichtung bildet. Hierzu ist es zweckmäßig, dass die gehäusefeste Lagerschale mehrteilig ausgebildet ist. Im Laufe der Labyrinthdichtung kann zudem zur weiteren Forderung der Abdichtung ein ringförmiges Dichtelement angeordnet sein.

Es ist darüber hinaus möglich, den Austritt von ungefilterter Kühlflüssigkeit in den sauberen Bereich dadurch zu verhindern, dass gefilterte Kühlflüssigkeit unter Überdruck an die Dichtung von außen angelegt wird, so dass einem Austritt von ungefilterter Kühlflüssigkeit nach außen und damit in den Bereich der gefilterten Kühlflüssigkeit mit größter Sicherheit entgegengewirkt wird. Weiterhin wird damit verhindert, dass mit der in das Lager eindringenden ungefilterten Kühlflüssigkeit Späne in das Lager gespült werden, die einen erhöhten Verschleiß des Lagers hervorrufen.

Zur Verhinderung von Ablagerungen im Inneren der Filtertrommel kann es zweckmäßig sein, dass der Innendurchmesser des inneren Lagerrings dem kleinsten Innendurchmesser des äußeren Lagerrings sowie dem Innendurchmesser der Filtertrommel angepasst ist.

Anschließend werden einige Ausführungsformen der erfindungsgemäßen Vorrichtung anhand von Zeichnungen beschrieben. Es zeigt:
- Fig. 1:: eine schematische Seitenansicht einer Vorrichtung der hier betroffenen Art,
- Fig. 2:: eine Detailansicht einer Filtertrommel in Verbindung mit einer Kratzerkette,
- Fig. 3:: einen Axialschnitt durch die Filtertrommel,

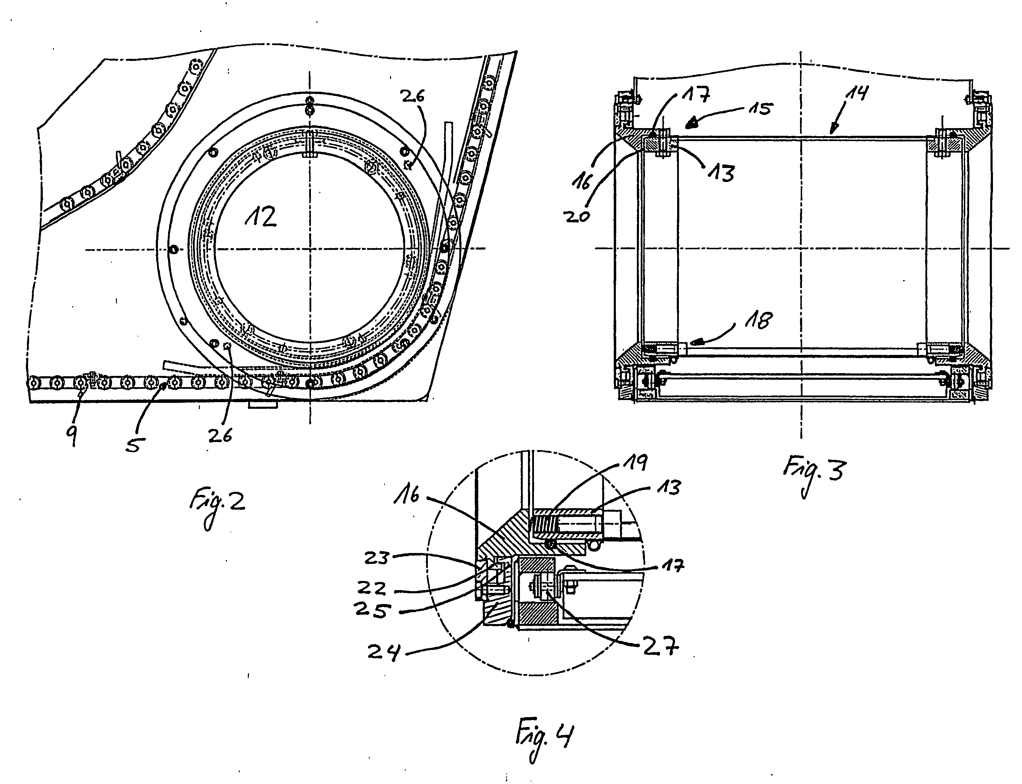

- Fig. 4:: eine Detailansicht der Lagerung der Filtertrommel nach den Figuren 2 und 3,
- Fig. 5:: eine Detailansicht einer Filtertrommel in Verbindung mit einem Schamierbandförderer,
- Fig. 6:: einen Axialschnitt durch die Filtertrommel nach Fig. 5,
- Fig. 7:: einen Detailschnitt betreffend die Lagerung der Filtertrommel nach den Figuren 5 und 6 und
- Fig. 8:: einen Detailschnitt von Lagering und Druckanschluss.

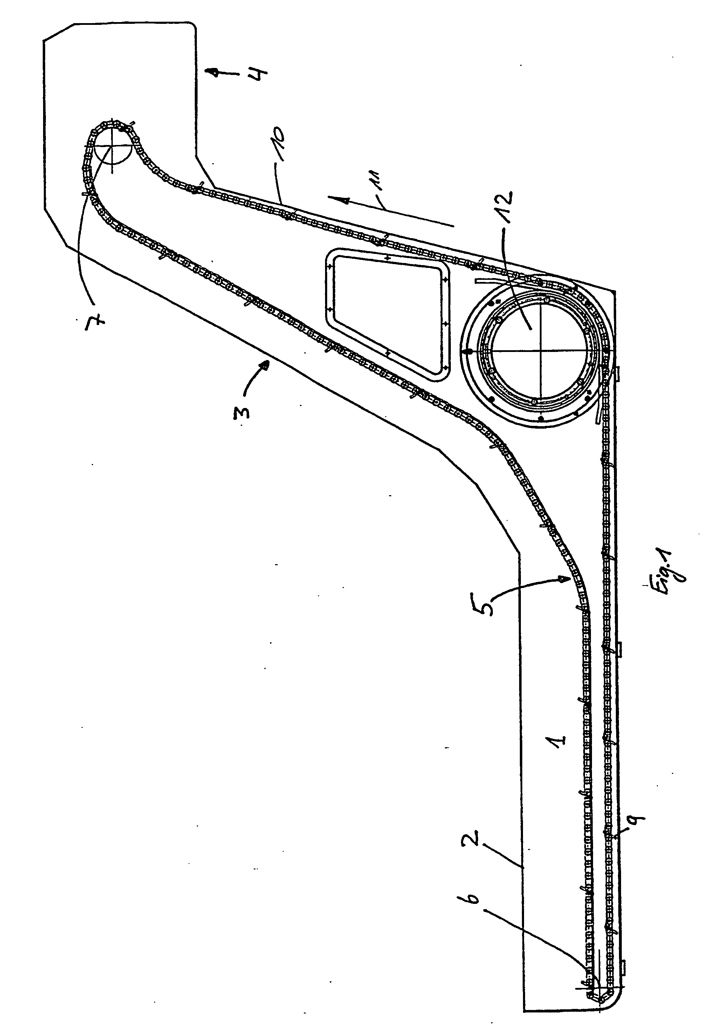

Fig. 1 zeigt die Seitenansicht einer Ausführungsform der erfindungsgemäßen Vorrichtung mit einem Aufnahmetank 1, der nach oben offen ist und der an Werkzeugmaschinen anfallende Späne und Kühlflüssigkeit aufnimmt. Dieser Aufnahmetank hat eine Überlaufkante 2. An den Aufnahmetank schließt sich ein ansteigender Führungsabschnitt 3 an, der in einem erhöhten Abgabeabschnitt 4 übergeht.

Eine an ihren beiden Seiten rollengeführte Kratzerkette ist hier als Transportelement vorgesehen. Diese Kratzerkette ist um ein unteres Umlenkelement 6 am Ende des Aufnahmetanks 1 geführt und läuft im Bereich des Abgabeabschnitts 4 um ein oberes Umlenkelement 7, das mit einem nicht dargestellten Antrieb gekoppelt ist. Sie trägt auf Abstand angeordnete Kratzerelemente 9, die im Bereich des unteren Trums nach unten, also in Richtung auf den Boden des Aufnahmetanks 1 bzw. auf die Seitenwand 10 des ansteigenden Abschnitts 3 vorstehen. Die Transportrichtung der Kratzerkette 5 ist durch den Pfeil 11 angezeigt.

Es ist eine Filtertrommel 12 vorgesehen, die im Gehäuse der Vorrichtung drehbar gelagert ist. Die beiden Enden der Filtertrommel 12 sind spiegelbildlich gleich ausgebildet. Sie weisen einen inneren Lagerring 13 auf, der die Filterbespannung 14 trägt und axial nach außen hin in eine Schulteraufnahme 15 eines äußeren Lagerrings 16 eingreift. Der innere Lagerring 13 wird also zum Teil von der Schulteraufnahme 15 des äußeren Lagerrings 16 überdeckt. Im Bereich dieser Überdeckung ist ein Dichtring 17 vorgesehen, der verhindert, dass ungefilterte Kühlflüssigkeit im Bereich dieser Überdeckung ins Innere des Trommelfilters übertreten kann.

Der innere Lagerring 13 ist im Bereich der Schulteraufnahme 15 mit dem äußeren Lagerring 16 verbunden, wodurch sichergestellt wird, dass sich beide Lagerringe immer nur gemeinsam drehen, und Relativbewegungen im Bereich der Schulteraufnahme 15 also nicht vorkommen. Der Dichtring 17 ist also nur statisch belastet.

In dem inneren Lagerring 13 sind mehrere parallel zur Achse des Trommelfilters 12 verlaufende Bohrungen 18 vorgesehen, in denen jeweils Schraubenfedern 19 sitzen, die gegen die Stimfläche 20 des äußeren Lagerrings 16 drücken. Dies hat zur Folge, dass der äußere Lagerring 16 über dem an seinem axial außen liegenden Rand vorgesehenen Winkelabschnitt 22 gegen das äußere Element 23 der im Gehäuse der Vorrichtung gelagerten Lagerschale einen Druck ausübt. Hier muss im Laufe der Zeit mit Verschleißerscheinungen zwischen dem Winkelabschnitt 22 und dem äußeren Element 23 der Lagerschale gerechnet werden. Solche Verschleißerscheinungen werden durch den von den Schraubenfedern 19 ausgeübten Axialdruck ohne weiteres ausgeglichen.

Das äußere Element 23 der Lagerschale ist mit einem inneren Element 24 verbunden, das in seinem radial innenliegenden Bereich ein kantenförmiges Profil 25 hat, welches in den Winkelabschnitt des äußeren Lagerrings 16 eingreift. Somit wird durch das Zusammenwirken des äußeren 23 und des inneren Lagerelements 24 einerseits und dem äußeren Lagerring 16 mit seinem hakenförmigen Winkelabschnitt 22 eine Labyrinthdichtung gebildet, die ein Austreten von ungefilterter Kühlflüssigkeit verhindert. Dies kann dadurch gefördert werden, dass im Bereich des Lagers durch den Verlauf der Dichtung gefilterte Kühlflüssigkeit hindurchgeführt wird. Der äußere Lagerring 16 ist nach außen hin konisch erweitert und in seinem Innendurchmesser an den des inneren Lagerrings 13 sowie der Spannung der Trommeldichtung angepasst.

In der dargestellten Ausführungsform ist ein Kratzerband 5 vorgesehen, das an seinen beiden Seiten über Rollen 27 geführt ist.

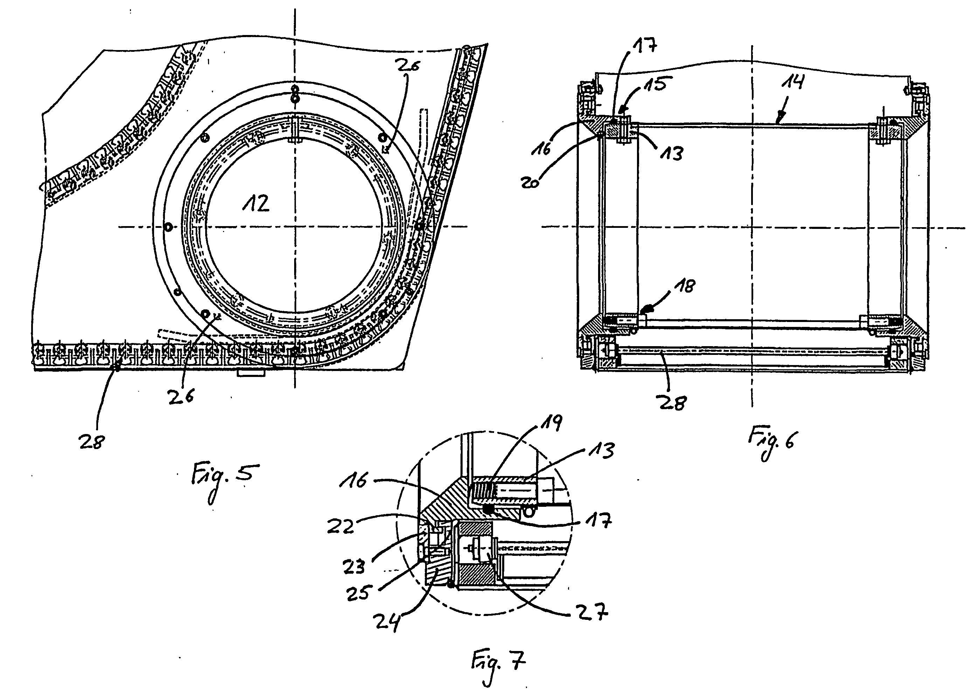

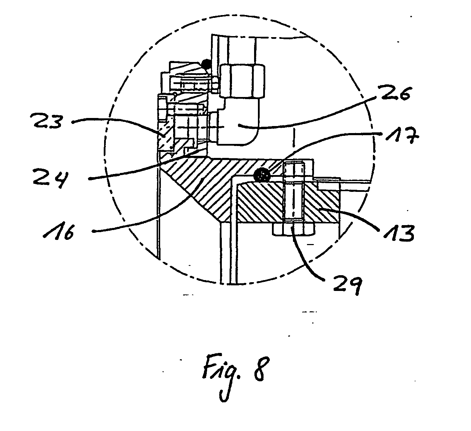

Die Ausführungsform nach den Figuren 5 bis 7 weicht von der zuvor beschriebenen allein dadurch ab, dass hier ein Schamierbandförderer 28 vorgesehen ist, der sich ebenfalls über Rollen 27 an seinen beiden Rändern abstützt.

Figur 8 zeigt den inneren Lagerring 13, der über die Schraube 29 drehfest in den äußeren Lagerring 16 eingreift. Die gehäusefeste Lagerschale, die aus dem inneren Lagerelement 24 und dem äußeren Lagerelement 23 gebildet ist, weist einen Druckanschluss 26 auf, über den die aus dem äußeren Lagerring 16 und der gehäusefesten Lagerschale gebildete Labyrinthdichtung mit gefilterter Kühlflüssigkeit gespült wird.

### Bezugszeichenliste

- 1: Aufnahmetank
- 2: Überlaufkante
- 3: Führungsabschnitt
- 4: Abgabeabschnitt
- 5: Kratzerkette
- 6: Umlenkelement
- 7: o. Umlenkelement
- 8: -
- 9: Kratzerelement
- 10: Seitenwand
- 11: Pfeil
- 12: Filtertrommel
- 13: innerer Lagerring
- 14: Filterbespannung
- 15: Schulteraufnahme
- 16: äußerer Lagerring
- 17: Dichtung
- 18: Bohrung
- 19: Schraubenfedern
- 20: Stimfläche
- 21: -
- 22: Winkelabschnitt
- 23: äußeres Lagerelement
- 24: inneres Lagerelement
- 25: kantenförmiges Profil
- 26: Druckanschluss
- 27: Rollen
- 28: Schamierbandförderer
- 29: Schraube

## Patentansprüche

1. Vorrichtung zur Aufnahme und Trennung von an Werkzeugmaschinen anfallenden Spänen und Kühlflüssigkeit, wobei die Kühlflüssigkeit zum Wiedereinsatz zurückgeführt und die Späne abgeführt werden,
mit einem Aufnahmetank (1) zur Aufnahme der Späne und der Kühlflüssigkeit,
einem sich an den Aufnahmetank (1) anschließenden ansteigenden Führungsabschnitt (3),
einem sich an den Führungsabschnitt (3) anschließenden erhöhten Abgabeabschnitt (4),
einem kettenartigen geschlossenen Transportelement, welches zumindest in dem die Späne und die Kühlflüssigkeit aufnehmenden Bereich sowie in dem Abgabeabschnitt (4) über Umlenkelemente (6, 7) geführt ist, von denen mindestens eines mit einem Drehantrieb gekoppelt ist, und
einer drehbar gelagerten Filtertrommel (12), welche mit dem Transportelement in Antriebsverbindung steht,
**dadurch gekennzeichnet,**
**dass** die Filtertrommel (12) an ihren beiden Enden je einen inneren Lagerring (13) aufweist, der jeweils drehfest in einen äußeren Lagerring (16) eingreift,
**dass** parallel zur Achse der Filtertrommel (12) verlaufende Federelemente (19) vorgesehen sind, die sich einerseits an dem inneren Lagerring (13) und andererseits an dem äußeren Lagerring (16) abstützen,
**dass** der äußere Lagerring (16) jeweils in einer gehäusefesten Lagerschale (23, 24) sitzt und sich an dieser in axialer Richtung abstützt und
**dass** Dichtelemente (17) jeweils zwischen dem inneren Lagerring (13) und äußeren Lagerring (16) vorgesehen sind.

2. Vorrichtung nach Anspruch 1,
**dadurch gekennzeichnet,**
**dass** die gehäusefeste Lagerschale (23, 24) mehrteilig ausgebildet ist.

3. Vorrichtung nach Anspruch 2,
**dadurch gekennzeichnet,**
**dass** jeweils der äußere Lagerring (16) mit der gehäusefesten Lagerschale (23, 24) eine Labyrinthdichtung bildet.

4. Vorrichtung nach Anspruch 3,
**dadurch gekennzeichnet,**
**dass** im Laufe der Labyrinthdichtung jeweils mindestens ein ringförmiges Dichtelement angeordnet ist.

5. Vorrichtung nach einem der vorhergehenden Ansprüche,
**dadurch gekennzeichnet,**
**dass** der Innendurchmesser des inneren Lagerrings (13) dem kleinsten Innendurchmesser des äußeren Lagerrings (16) sowie dem Innendurchmesser der Filtertrommel (16) angepasst ist.

6. Vorrichtung nach einem der vorhergehenden Ansprüche,
**dadurch gekennzeichnet,**
**dass** der äußere Lagerring (16) einen Druckanschluss (26) für die Zufuhr von gefilterter Kühlflüssigkeit zur Spülung des Zwischenraums zwischen dem äußeren Lagerring (16) und der gehäusefesten Lagerschale (23, 24) aufweist.

## Claims

1. A device for receiving and separating chips and coolant collecting on machine tools, the coolant being returned for reuse and the chips being removed,
having a receiving tank (1) to receive the chips and the coolant,
a rising guide section (3) adjoining the receiving tank (1),
an elevated discharge section (4) adjoining the guide section (3),
a chain-like closed transport element, which, at least in the region receiving the chips and the coolant and in the discharge section (4), is guided over deflection elements (6, 7), at least one of which is coupled to a rotary drive, and
a rotatably mounted filter drum (12), which is in drive connection with the transport element,
**characterized in that**
the filter drum (12) has an internal bearing ring (13) on each of its two ends, each of which engages in an external bearing ring (16) so that they rotate together,
spring elements (19), which run parallel to the axis of the filter drum (12), are provided which are supported on one side on the internal bearing ring (13) and on the other side on the external bearing ring (16),each of the external bearing rings (16) is seated in a bearing shell (23, 24), which is fixed to the housing, and is supported on it in the axial direction,
sealing elements (17) are provided between each of the internal bearing rings(13) and the external bearing rings (16).

2. The device according to Claim 1,
**characterized in that**
the bearing shell (23, 24), which is fixed to the housing, is implemented in multiple parts.

3. The device according to Claim 2,
**characterized in that**
each of the external bearing rings (16) forms a labyrinth seal with the bearing shell (23, 24), which is fixed to the housing.

4. The device according to Claim 3,
**characterized in that**
at least one annular sealing element is positioned in the course of each labyrinth seal.

5. The device according to one of the preceding claims,
**characterized in that**
the internal diameter of the internal bearing ring (13) is tailored to the smallest internal diameter of the external bearing ring (16) and to the internal diameter of the filter drum (12).

6. Device according to one of the preceding claims,
**characterized in that**
the external bearing ring (16) has a pressure connection (26) for supplying filtered coolant to wash the space between the external bearing ring (16) and the bearing shell (23, 24), which is fixed to the housing.

## Revendications

1. Dispositif de recueil et de séparation de copeaux et de liquide de refroidissement tombant sur des machines-outils, dans lequel le liquide de refroidissement est recirculé en vue de sa réutilisation et les copeaux sont évacués,
comprenant un réservoir de recueil (1) pour recueillir les copeaux et le liquide de refroidissement,
une portion de guidage (3) montante, se raccordant au réservoir de recueil (1),
une portion d'évacuation rehaussée (4) se raccordant à la portion de guidage (3),
un élément de transport fermé de type chaîne, qui est guidé au moins dans la région recueillant les copeaux et le liquide de refroidissement ainsi que dans la portion d'évacuation (4) par le biais d'éléments de renvoi (6, 7) dont au moins un est accouplé à un entraînement en rotation, et
un tambour filtre (12) monté à rotation qui est en liaison d'entraînement avec l'élément de transport,
**caractérisé en ce que**
le tambour filtre (12) présente à ses deux extrémités à chaque fois une bague de palier interne (13) qui vient en prise de manière fixe en rotation dans une bague de palier externe (16), **en ce que** l'on prévoit des éléments élastiques (19) s'étendant parallèlement à l'axe du tambour filtre (12), lesquels s'appuient d'une part sur la bague de palier interne (13) et d'autre part sur la bague de palier externe (16),
la bague de palier externe (16) repose à chaque fois dans une coque de palier (23, 24) fixée au boîtier et s'appuie sur celle-ci dans la direction axiale, et
des éléments d'étanchéité (17) sont à chaque fois prévus entre la bague de palier interne (13) et la bague de palier externe (16).

2. Dispositif selon la revendication 1,
**caractérisé en ce que**
la coque de palier (23, 24) fixée au boîtier est réalisée en plusieurs parties.

3. Dispositif selon la revendication 2,
**caractérisé en ce**
**qu'**à chaque fois la bague de palier externe (16) forme avec la coque de palier fixée au boîtier (23, 24) un joint à labyrinthe.

4. Dispositif selon la revendication 3,
**caractérisé en ce**
**qu'**au moins un élément d'étanchéité annulaire est disposé dans le parcours du joint à labyrinthe.

5. Dispositif selon l'une quelconque des revendications précédentes,
**caractérisé en ce que**
le diamètre intérieur de la bague de palier interne (13) est adapté au plus petit diamètre intérieur de la bague de palier externe (16) ainsi qu'au diamètre intérieur du tambour filtre (12).

6. Dispositif selon l'une quelconque des revendications précédentes,
**caractérisé en ce que**
la bague de palier externe (16) présente un raccordement de pression (26) pour l'apport de liquide de refroidissement filtré en vue du rinçage de l'espace intermédiaire entre la bague de palier externe (16) et la coque de palier (23, 24) fixée au boîtier.
